(19) Europäisches Patentamt
European Patent Office
Office européen des brevets

(11) Veröffentlichungsnummer: **0 303 927 B1**

# (12) EUROPÄISCHE PATENTSCHRIFT

(45) Veröffentlichungstag der Patentschrift: **22.09.93**

(51) Int. Cl.⁵: **C08G 18/10**, C08G 18/83, C09K 3/10

(21) Anmeldenummer: **88112873.0**

(22) Anmeldetag: **08.08.88**

## (54) Verwendung von Epithioderivaten ungesättigter Kohlenstoffverbindungen als Weichmacher sowie diese enthaltende Dichtungsmassen.

(30) Priorität: **17.08.87 DE 3727412**

(43) Veröffentlichungstag der Anmeldung: **22.02.89 Patentblatt 89/08**

(45) Bekanntmachung des Hinweises auf die Patenterteilung: **22.09.93 Patentblatt 93/38**

(84) Benannte Vertragsstaaten: **AT BE CH DE FR GB IT LI NL SE**

(56) Entgegenhaltungen:
**EP-A- 0 001 217**
**EP-A- 0 200 861**
**US-A- 2 845 438**
**US-A- 3 234 236**

(73) Patentinhaber: **Henkel Kommanditgesellschaft auf Aktien**

**D-40191 Düsseldorf(DE)**

(72) Erfinder: **Artiga Gonzalez, René-Andrés, Dr.**
**Am Nettchesfeld 30**
**D-4000 Düsseldorf 13(DE)**
Erfinder: **Rutzen, Horst, Dr.**
**Falkenweg 12**
**D-4018 Langenfeld(DE)**
Erfinder: **Podola, Tore**
**Deusserstrasse 31**
**D-4019 Monheim(DE)**
Erfinder: **Neitzer, Klaus**
**Leo-Baeck-Strasse 47**
**D-4000 Düsseldorf 13(DE)**

**EP 0 303 927 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Epithioderivaten ungesättigter Kohlenstoffverbindungen mit einem Molekulargewicht bzw. einem Zahlenmittel desselben von 80 bis 10000, die mindestens ein Schwefelatom pro 30 Kohlenstoffatome enthalten, als Weichmacher und Stabilisatoren für in Gegenwart oxidierender Metallverbindungen aushärtende Dichtungsmassen auf Basis von SH-terminierten Derivaten von Polyestern oder Polyethern. Die Erfindung betrifft weiterhin die genannten Epithioderivate enthaltende Dichtungsmassen.

Aus der DE-A 36 01 189 ist die Verwendung von SH-terminierten Oligourethanen auf der Basis von Polyestern oder Polyethern zusammen mit Weichmachern, Füllstoffen und weiteren Hilfsstoffen als Dichtungsmassen bekannt. Derartige Zusammensetzungen werden unmittelbar vor der Härtung mit einem Oxidationsmittel, z.B. Mangandioxid oder Bleidioxid, versetzt. Dabei erfolgt anschließend eine oxidative Vernetzung über die SH-Gruppen.

Um bei den genannten Dichtungsmassen eine entsprechende Elastizität bzw. Stabilisierung gegen Einwirkung von Wasser zu erzielen, setzt man derartigen Mischungen Weichmacher in einer Menge von 50 bis 90 % zu. Typische Beispiele für solche Weichmacher sind Chlorparaffine oder Esterderivate wie Dialkylphthalsäureester oder Alkansulfonsäurealkylester, weiterhin Polybutene, z.B. wie in der US-C 4 060 570 beschrieben. Durch diese Weichmacher erhält man zumeist eine befriedigende Beständigkeit hinsichtlich des elastischen Verhaltens und der Dichtwirkung. Die Wirkungen lassen jedoch mit der Zeit bei stärkerer Lichteinwirkung bzw. unter dem Einfluß von Wasser und Wasserdampf nach. Es besteht daher ein Bedürfnis nach solchen Weichmachern bzw. Stabilisatoren, die die Dichtungsmassen in besonderem Maße elastifizieren und bei der Einwirkung von Wasser, Wärme und/oder Licht den Beibehalt eines guten Elastizitätsverhaltens gewährleisten.

Die vorstehend genannte Aufgabe wird durch die obengenannten, erfindungsgemäß einzusetzenden Epithioderivate gelöst.

Die erfindungsgemäß zu verwendenden Epithioderivate sind bekannte Verbindungen, die z.B. in den folgenden Veröffentlichungen beschrieben sind.

- G. Maerker, Topics in lipid chemistry, Vol.2, S. 159 (1971)
- US-C 3 846 449, 3 733 273
- R. Kannan et. al, Fette-Seifen-Anstrichmittel, 69, 336 (1967)
- F.C. Magne et. al, J. American Oil Chemist Soc. 52, 494 (1975)
- F.D. Gunstone et. al., Chemistry and Physics of lipids, 13, 92 (1974).

Für den Zweck der Erfindung sind sämtliche Epithioderivate geeignet, die die obengenannten Kriterien hinsichtlich des Molekulargewichts und der Anzahl der Schwefelatome erfüllen; eine einsetzbare Verbindung mit dem niedrigsten Molekulargewicht ist Cyclohexan-episulfid.

Die erfindungsgemäß einsetzbaren Epithioderivate weisen Molekulargewichte (bei Einzelverbindungen) bzw. Zahlenmittel des Molekulargewichts (bei technischen Gemischen bzw. Polymergemischen) von 80 bis 10.000, bevorzugt 1500 bis 6500 auf. Besonders vorteilhaft sind solche Epithioderivate, die einen Schwefelgehalt von 3,5 bis 8,5 Gew.-% aufweisen.

Gemäß einer weiteren vorteilhaften Ausführungsform der Erfindung verwendet man Epithiopolybutadien, insbesondere mit einem Molekulargewicht bis zu 2500. Besonders bevorzugt sind weiterhin Epithioderivate aus der von Epithiofettsäuren mit 8 bis 22 Kohlenstoffatomen, $C_1$-$C_4$-Alkylestern und Glyceriden derselben und von den genannten Epithiofettsäuren abgeleiteten Epithiofettalkoholen gebildeten Gruppe. Vorzugsweise werden die genannten Epithioderivate aus technischen Gemischen von Fettsäuren bzw. Fettsäureglyceriden pflanzlichen, tierischen und/oder seetierischen Ursprungs mit hohen Anteilen an ungesättigten Fettsäuren hergestellt, z.B. aus Sonnenblumenöl, Sojaöl, Rüböl oder dergleichen. Man kann daher die Epithioderivate natürlicher Fettsäureglyceride verwenden; jedoch auch die Epithioderivate, die aus den aus Glyceriden herstellbaren Fettsäuren, $C_1$-$C_4$-Alkylestern dieser Fettsäuren oder Epithiofettalkoholen herstellbar sind.

Die Erfindung betrifft weiterhin Dichtungsmassen, die in der obengenannten Weise in Anwesenheit oxidierender Metallverbindungen aushärten und die

a) SH-terminierte Derivate von Polyester- und Polyether-polyolen mit Zahlenmitteln des Molekulargewichts von 1000 bis 6500 und

b) die erfindungsgemäß zu verwendenden Epithioderivate in Gewichtsverhältnissen von 1 : 0,05 bis 1 : 1,5

sowie gegebenenfalls übliche, zusätzliche Weichmacher, Füllstoffe, Pigmente, Antioxidationsmittel, Haftvermittler und weitere, übliche Hilfsstoffe enthalten.

Es sind prinzipiell zwei Wege bekannt, wie man zu den vorgenannten SH-terminierten Polyester- oder Polyether-polyolen gelangt: Der erste Weg besteht in der Umsetzung von Polyester-oder Polyether-polyolen

mit Di- oder Polyisocyanaten im Überschuß und Umsetzung der freien NCO-Gruppen mit Mercaptoalkanolen, vorzugsweise Mercaptoethanol. Die erhaltenen Derivate können als SH-terminierte Oligourethane bezeichnet werden. Andererseits kommt man zu SH-terminierten Polyestern bzw. Polyethern, wenn man die freien OH-Gruppen von Polyester-polyolen bzw. Polyether-polyolen mit Thioalkansäuren, vorzugsweise Thioglykolsäure, umsetzt.

Für die Herstellung von SH-terminierten Oligourethanen sind aus dem Stand der Technik zahlreiche Verfahren bekannt, wobei man von den verschiedenartigsten Polyolen ausgehen kann, die mit überschüssigen Di- oder Triisocyanaten umgesetzt werden. Unter den geeigneten Polyolen sind auch Additionsprodukte von Alkylenoxiden, z.B. Ethylenoxid und/oder Propylenoxid, beschrieben worden. Ausgezeichnet verarbeitbare Oligourethane werden erhalten, indem man, ausgehend von einem Additionsprodukt aus Propylenoxid und Ethylenoxid an Trimethylolpropan, zunächst das Diisocyanat addiert, so daß ein Prepolymeres anfällt, welches noch hinreichend Isocyanatendgruppen für die Umsetzung mit Mercaptoethanol in ein Isocyanatgruppen-freies Oligourethan aufweist. Für die Zwecke der Erfindung besonders geeignet sind SH-terminierte Oligourethane gemäß DE-A 36 01 189, auf deren Offenbarung hier Bezug genommen wird. Sie beschreibt die Herstellung von SH-terminierten Oligourethanen durch Umsetzung von Additionsprodukten des Propylenoxids an Trimethylolpropan und/oder Glycerin und/oder Trimethylolethan mit einem Gemisch der isomeren Toluylendiisocyanate in einem einfach äquivalenten Überschuß, bezogen auf die Hydroxylgruppen, und Umsetzung der gebildeten Isocyanatprepolymere mit Mercaptoethanol; die Additionsprodukte können ein Zahlenmittel des Molekulargewichts zwischen etwa 1000 und 6500 aufweisen.

Zur Herstellung der SH-terminierten Polyester bzw. Polyether, die erfindungsgemäß eingesetzt werden können, sind ebenfalls zahlreiche Verfahren bekannt. Besonders vorteilhaft für die Dichtungsmassen der Erfindung sind solche SH-terminierten Polyester bzw. Polyether, die man erhält, wenn man

a) ein oder mehrere Addukte von Ethylenoxid und/oder Propylenoxid an Triole oder Tetrole der allgemeinen Formel (I)

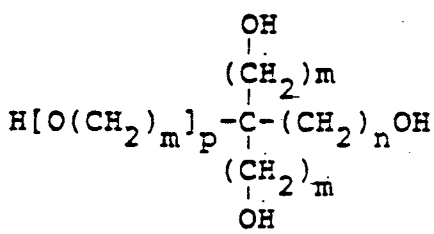

(I)

in der
m für die Zahlen 1, 2 oder 3,
n für die Zahlen 0, 1 oder 2 und
p für 0 oder 1 stehen,
mit einer Molekularmasse im Bereich von 400 bis 6500 mit einer oder mehreren Thioalkancarbonsäuren der allgemeinen Formel (II)

HS-R-COOH (II)

in der R für einen geradkettigen oder verzweigten Alkylenrest mit 1 bis 8 C-Atomen steht, in einem solchen Molverhältnis umsetzt, daß 1 Mol der Thioalkancarbonsäuren (II) einem Äquivalent der OH-Gruppen in der Verbindung (I) gegenübersteht,

b) der Reaktionsmischung ein Neutralisationsmittel in einer Menge zusetzt, die geeignet ist, die nicht umgesetzte Menge der Thioalkancarbonsäure (II) zu neutralisieren,

c) gleichzeitig mit dem Zusatz des Neutralisationsmittels oder unmittelbar danach eine oder mehrere das Neutralisationswasser bindende Verbindungen sowie ein im Reaktionsmedium unlösliches, oberflächlich sauer modifiziertes, die Koagulation förderndes Hilfsmittel im Überschuß zusetzt, und

d) das Reaktionsgemisch in an sich bekannter Weise von den ausgefallenen und zugesetzten Feststoffen befreit und das Prepolymer gewünschtenfalls isoliert.

Hierbei besonders bevorzugt sind Addukte von Propylenoxid an Triole oder Tetrole der allgemeinen Formel (I), insbesondere Glycerin, Trimethylolpropan und Pentaerythrit, insbesondere bevorzugt Glycerin, die mit Thioalkancarbonsäuren mit 1 bis 8 Kohlenstoffatomen, insbesondere 1 bis 4 Kohlenstoffatomen in einem geradkettigen Alkylrest, vorzugsweise Thioglykolsäure, umgesetzt werden.

Demgemäß enthalten besonders bevorzugte Dichtungsmassen der Erfindung SH-terminierte Derivate von Polyether- bzw. Polyester-polyolen, die durch Umsetzung von 2 bis 4 OH-Gruppen enthaltenden Polyether- bzw. Polyester-polyolen mit Zahlenmitteln des Molekulargewichts von 1000 bis 6500 entweder mit Thioalkansäuren oder zunächst mit einem Überschuß an Diisocyanaten und anschließender Umsetzung der freien NCO-Gruppen mit Thioalkanolen erhältlich sind.

Die Dichtungsmassen der Erfindung können gegebenenfalls weitere Zusatzstoffe enthalten, z.B. übliche, zusätzliche Weichmacher, Füllstoffe, Pigmente, Antioxidationsmittel, Haftvermittler und weitere übliche Hilfsstoffe. Als zusätzliche Weichmacher eignen sich z.B. Dioctylphthalat, Alkylsulfonsäureester und dergleichen. Als typische Beispiele für Füllstoffe können Kieselsäure, Kreide, Ruß, Talg, Kunststoffpulver (quellbares PVC-Pulver) und dergleichen genannt werden. Als Pigmente eignen sich z.B. solche in Pulverform oder Farbpasten. Als Antioxidationsmittel eignen sich übliche Alterungsschutzmittel wie Derivate von Hydrochinonethern, Benzotriazol und dergleichen. Andere Hilfsstoffe sind Beschleuniger, UV-Lichtschutzmittel und dergleichen. Die vorgenannten Zusätze sind dem Fachmann auf dem Gebiet der Dichtungsmassen bekannt.

Gemäß einer weiteren vorteilhaften Ausführungsform der Erfindung weisen die Dichtungsmassen einen Gehalt an
20 bis 30 Gew.-% der SH-terminierten Derivate von Polyester- oder Polyether-polyolen und
20 bis 30 Gew.-% Weichmachern, Rest Füllstoffe und/oder Pigmente sowie gegebenenfalls die vorstehend genannten üblichen Hilfsstoffe auf,
wobei die Weichmacher ihrerseits zu 15 bis 100 Gew.-% aus den erfindungsgemäß zu verwendenden Epithioverbindungen und zu 85 bis 0 Gew.-% aus üblichen Weichmachern bestehen.

Die Erfindung wird im folgenden anhand bevorzugter Ausführungsbeispiele näher erläutert.

Beispiel 1.

Herstellung eines SH-terminierten Polyurethans.
(Gemäß Beispiel 2 der DE-OS 36 01 189)

Ein Propylenoxidaddukt an Glycerin mit einem Zahlenmittel des Molekulargewichts von 3900 und einer OH-Zahl von 42 wurde in einer Menge von 4000 g in einem Rührgefäß mit einer zweimolaren Menge Toluylendiisocyanat, bezogen auf OH-Gruppen, versetzt (522 g). Nach Einrühren des Toluylendiisocyanats wurde das Reaktionsgemisch auf 80 °C erwärmt. Nach sechsstündigem Rühren wurden 242 g Mercaptoethanol zugesetzt und solange auf 100 °C erwärmt (ca. 0,5 Stunden), bis im IR-Spektrum kein freies Isocyanat erkennbar war. Man erhielt eine klare, mittelviskose Flüssigkeit.

Herstellung der Dichtungsmassen.

Mit dem vorstehend genannten SH-terminierten Oligourethan wurden die folgenden Dichtungsmassen hergestellt:

| | |
|---|---|
| SH-terminiertes Oligourethan | 30 T |
| Weichmacher (A - E) | 20 T |
| Kreide | 40 T |
| Titandioxid | 10 T |
| handelsübliches Hydrochinonetherderivat (Antioxidant) | 1 T |
| Benzotriazol (Antioxidant) | 2 T |
| Mercaptopropyltriethoxysilan (Haftvermittler) | 1 T |
| Dibutylzinndilaurat | 0,5 T |

Als Härterkomponente diente eine Formulierung der Zusammensetzung

| | |
|---|---|
| Mangandioxid | 40 T |
| Kreide | 15 T |
| Dibutylphosphat | 40 T |
| Tetramethylthiurandisulfid (Beschleuniger) | 5 T |

Die Dichtungsmassen wurden mit der Härterkomponente in einer Menge von 2,5 %, bezogen auf Mangandioxid, versetzt. Nach 7 Tagen wurden Prüfkörper nach DIN 53 504 hergestellt; die Stabilitätsprüfung erfolgte nach 7-tägiger Lagerung in Wasser bei 40 °C.

Vor und nach der Wasserlagerung wurden die Reißfestigkeit Rf ($N/mm^2$) und die Reißdehnung Rd (%) als Maß für die Elastizität bestimmt. Die Ergebnisse sind in Tabelle 1 zusammengefaßt; die Weichmacher A, B, C und D entsprechen dem Stand der Technik, der Weichmacher E ist erfindungsgemäß.

Tabelle 1

| Weichmacher | Vor | | Nach | |
|---|---|---|---|---|
| | Wasserlagerung | | | |
| | Rf ($N/mm^2$) | Rd (%) | Rf ($N/mm^2$) | Rd (%) |
| A. Chloriertes Alkan | 1,40 | 300 | 1,21 | 160 |
| B. Dibutylphthalat | 1,06 | 225 | 0,90 | 140 |
| C. Bis-(2-ethylhexyl)-thioglykolatsulfid | 0,99 | 210 | 0,75 | 170 |
| D. Alkan(C18)sulfonsäureester | 1,17 | 250 | 0,88 | 200 |
| E. Epithiostearinsäuremethylester | 1,37 | 575 | 1,00 | 540 |

Die Ergebnisse zeigen, daß mit dem erfindungsgemäßen Weichmacher E die Elastizitätsabnahme am geringsten ist.

Beispiel 2.

Aus einem SH-terminierten Oligourethan gemäß Beispiel 1 wurden verschiedene Dichtungsmassen unter Verwendung unterschiedlicher Weichmacher (A - H) mit der folgenden Rezeptur hergestellt:

| | |
|---|---|
| SH-terminiertes Oligourethan | 30 T |
| Weichmacher (A - H) | 20 T |
| Kreide | 40 T |
| Titandioxid | 10 T |

Nach Härtung mit einer Härterkomponente gemäß Beispiel 1 wurden bei der Elastizitätsprüfung vor und nach Wasserlagerung gemäß DIN 53 505 die in Tabelle 2 aufgeführten Ergebnisse erhalten.

Tabelle 2

| Weichmachermischung | Verhältnis | Vor Wasserlagerung Rf (N/mm²) | Vor Wasserlagerung Rd (%) | Nach Wasserlagerung Rf (N/mm²) | Nach Wasserlagerung Rd (%) |
|---|---|---|---|---|---|
| A. Alkansulfonsäureester | | 1,10 | 400 | 0,77 | 350 |
| B. Alkansulfonsäureester/ Epithiostearinsäureester | 15 : 5 | 1,32 | 480 | 1,06 | 590 |
| C. Alkansulfonsäureester/ Epithiostearinsäureester | 10 : 10 | 1,34 | 480 | 1,04 | 540 |
| D. Epithiostearinsäureester | | 1,51 | 625 | 1,03 | 590 |
| F. Alkansulfonsäureester/ Sojaölepisulfid | 15 : 5 | 1,27 | 440 | 0,96 | 450 |
| G. Alkansulfonsäureester/ Sojaölepisulfid | 10 : 10 | 1,67 | 625 | 1,12 | 525 |
| H. Sojaölepisulfid | | 1,43 | 750 | 1,10 | 650 |

Der Weichmacher A entspricht dem Stand der Technik; die Weichmacher B bis H sind erfindungsgemäß.

Die Ergebnisse der Reißfestigkeit und Reißdehnung zeigen, daß mit den erfindungsgemäß zu verwendenden Weichmachern die besten Ergebnisse erzielt werden.

Beispiel 3

Aus einem SH-terminierten Oligourethan gemäß Beispiel 1 wurden Dichtungsmassen der folgenden Zusammensetzung hergestellt:

| | |
|---|---|
| SH-terminiertes Oligourethan | 30 T |
| Weichmacher (A - D) | 20 T |
| Kreide | 40 T |
| Titandioxid | 10 T |
| handelsübliches Hydrochinonetherderivat (Antioxidant) | 1 T |
| Benzotriazol (Antioxidant) | 1 T |
| Glycidylether | 1 T |
| Mercaptopropyltriethoxysilan (Haftvermittler) | 2 T |

Nach Zugabe der Härterkomponente gemäß Beispiel 1 wurden nach DIN 52 455 (Teil 1 und 3) Prüfkörper hergestellt, und zwar mit dem Dichtstoff versehene Fugen aus Aluminium und Glas. Nach der Aushärtung wurden die Prüfkörper in Wasser gelagert und von der Glasseite her mit einer Osram-Vitalux-UV-Lampe bestrahlt. Die e-Moduli als Maß für die Elastizität und das Bruchbild beim Zerreißen sind in Tabelle 3 zusammengefaßt.

Tabelle 3

| Weichmacher | Vor der Behandlung | | Nach der Behandlung | |
|---|---|---|---|---|
| | e-Modul $N/mm^2$ | Bruchbild | e-Modul $N/mm^2$ | Bruchbild |
| A. Alkansulfonsäureester | 0,34 | Kohäsion | 0,44 | Adhäsion |
| B. Alkansulfonsäureester/Epithiostearinsäureester | 0,31 | Kohäsion | 0,41 | Adhäsion/Kohäsion |
| C. Epithiostearinsäureester | 0,36 | Kohäsion | 0,41 | Adhäsion/Kohäsion |
| D. Sojaölepisulfid | 0,37 | Kohäsion | 0,52 | Kohäsion |

Es zeigte sich, daß die unter erfindungsgemäßer Verwendung von Epithioderivaten erhaltenen Dichtungsmassen (B bis D) bessere Ergebnisse ziegen als unter Verwendung des üblichen Weichmachers A erhaltene.

Beispiel 4.

Herstellung eines SH-terminierten Polyesters

1550 g eines Adduktes von Propylenoxid an Glycerin mit einem mittleren Molekulargewicht von 4040 und 110 g Arthioglykolsäure wurden miteinander in der gleichen Volumenmenge Xylol gemischt und mit 1 %, bezogen auf die Gesamtmenge des Reaktionsgemisches, p-Toluolsulfonsäure versetzt. Die Veresterung erfolgte unter Stickstoffatmosphäre innerhalb von 4 Stunden unter Sieden des Reaktionsgemisches, wobei das gebildete Wasser mit Hilfe eines Wasserabscheiders abgetrennt wurde. Nach 4 Stunden hatte sich die vorausberechnete Menge Wasser gebildet. Die Reaktionsmischung wurde auf Raumtemperatur abgekühlt und innerhalb von 5 min mit 20 %-iger wäßriger Natronlauge neutralisiert. Danach wurden 180 g festes Natriumsulfat (wasserfrei) zugesetzt, gefolgt von 120 g saurem Aluminiumtrioxid. Nach 45 min gab man 30 g Kieselgur als Filtrierhilfsmittel zu, rührte 50 min kräftig durch und ließ die Feststoffe sich im Verlauf von 1,5 Stunden absetzen. Nach dem Filtrieren wurde das Lösemittel bei geringfügig erhöhter Temperatur (35 bis 40 °C) im Vakuum abgezogen. Man erhielt das gereinigte Prepolymere mit einer Viskosität (Brookfield) von 1 150 mPa.s, einer Säurezahl von 0,2 und einem Mercaptangehalt von 1,6 %.

Herstellung von Dichtungsmassen.

Aus dem vorstehend genannten SH-terminierten Polyester wurden Dichtungsmassen gemäß folgender Rezeptur hergestellt:

| | |
|---|---|
| SH-terminierter Polyester | 30 T |
| Weichmacher (A - D) | 20 T |
| Kreide | 40 T |
| Titandioxid | 10 T |
| handelsübliches Hydrochinonetherderivat (Antioxidant) | 1 T |
| Benzotriazol (Antioxidant) | 2 T |
| Mercaptopropyltriethoxysilan (Haftvermittler) | 1 T |
| Dibutylzinndilaurat | 0,5 T |

Nach Zugabe einer Härterkomponente gemäß Beispiel 1 erfolgte die Prüfung der Wasserstabilität wie in Beispiel 1 beschrieben nach DIN 53 504.

Die Ergebnisse sind in Tabelle 4 zusammengefaßt.

Tabelle 4

| Weichmacher | Vor | | Nach | |
|---|---|---|---|---|
| | Wasserlagerung | | | |
| | Rf ($N/mm^2$) | Rd (%) | Rf ($N/mm^2$) | Rd (%) |
| A. Chloriertes Alkan | 1,09 | 90 | 0,46 | 100 |
| B. Dibutylphthalat | 0,76 | 283 | 0,39 | 180 |
| C. Alkan(C18)sulfonsäureester | 0,82 | 200 | 0,51 | 175 |
| D. Epithiostearinsäuremethylester | 1,17 | 275 | 0,96 | 220 |

Es zeigt sich, daß die Dichtungsmasse der Erfindung mit dem erfindungsgemäßen Weichmacher D nach der Wasserlagerung bessere Ergebnisse zeigt als die Dichtungsmassen mit den Weichmachern A - C gemäß Stand der Technik.

**Patentansprüche**

**1.** Verwendung von Epithioderivaten ungesättigter Kohlenstoffverbindungen mit einem Molekulargewicht der Einzelverbindungen bzw. einem Zahlenmittel des Molekulargewichtes von technischen Gemischen und Polymergemischen von 80 bis 10000, die mindestens ein Schwefelatom pro 30 Kohlenstoffatome enthalten, als Weichmacher und Stabilisatoren für in Gegenwart oxidierender Metallverbindungen aushärtende Dichtungsmassen auf Basis von SH-terminierten Derivaten von Polyestern oder Polyethern, wobei das Gewichtsverhältnis SH-Verbindung/Epithioderivat 1 : 0,05 bis 1 : 1,5 beträgt.

**2.** Verwendung nach Anspruch 1, dadurch gekennzeichnet, daß die Epithioderivate ein Molekulargewicht bzw. ein Zahlenmittel desselben von 115 bis 6500 aufweisen.

**3.** Verwendung nach Anspruch 1 oder 2, dadurch gekennzeichnet, daß die Epithioderivate einen Schwefelgehalt von 3,5 bis 8,5 Gew.-% aufweisen.

**4.** Verwendung nach einem der Ansprüche 1 bis 3, dadurch gekennzeichnet, daß als Epithioderivat Epithiopolybutadien verwendet wird.

**5.** Verwendung nach einem der Ansprüche 1 bis 3, dadurch gekennzeichnet, daß die Epithioderivate aus der von Epithiofettsäuren mit 8 bis 22 Kohlenstoffatomen, $C_1$-$C_4$-Alkylestern und Glyceriden derselben und von den Epithiofettsäuren abgeleiteten Epithiofettalkoholen gebildeten Gruppe ausgewählt sind.

**6.** Dichtungsmassen, die in Anwesenheit oxidierender Metallverbindungen aushärten, enthaltend

a) SH-terminierte Derivate von Polyester- oder Polyether-polyolen mit Zahlenmitteln des Molekulargewichts von 1000 bis 6500 und

b) gemäß einem der Ansprüche 1 bis 5 zu verwendende Epithioderivate

in Gewichtsverhältnissen von 1 : 0,05 bis 1 : 1,5,

sowie gegebenenfalls übliche, zusätzliche Weichmacher, Füllstoffe, Pigmente, Antioxidationsmittel,

Haftvermittler und weitere, übliche Hilfsstoffe.

7. Dichtungsmassen nach Anspruch 6, dadurch gekennzeichnet, daß sie SH-terminierte Derivate von Polyether-polyester-polyolen enthalten, die durch Umsetzung von 2 bis 4 OH-Gruppen enthaltenden Polyether- bzw. Polyester-polyolen mit Zahlenmitteln des Molekulargewichts von 1000 bis 6500 entweder mit Thioalkansäuren oder zunächst mit einem Überschuß an Diisocyanaten und anschließender Umsetzung der freien NCO-Gruppen mit Mercaptoalkanolen erhältlich sind.

8. Dichtungsmasse nach Anspruch 6 oder 7, enthaltend
a) SH-terminierte Derivate von Polyester-polyolen, erhältlich durch Umsetzung von Propylenoxidaddukten des Glycerins, Trimethylolpropans oder Pentaerythrits mit Zahlenmitteln des Molekulargewichts von 1000 bis 6500 entweder mit Thioglykolsäure oder zunächst mit Toluylendiisocyanat im einfach äquivalenten Überschuß, bezogen auf Hydroxylgruppen, und anschließender Umsetzung der Isocyanatprepolymere mit Mercaptoethanol, und
b) Epithioderivate aus der von Epithiofettsäuren mit 8 bis 22 Kohlenstoffatomen, $C_1$-$C_4$-Alkylestern und Glyceriden derselben und von den Epithiofettsäuren abgeleiteten Epithioalkoholen gebildeten Gruppe.

9. Dichtungsmassen nach einem der Ansprüche 6 bis 8, gekennzeichnet durch einen Gehalt an
20 bis 30 Gew.-% der SH-terminierten Derivate von Polyester- oder Polyether-polyolen und
20 bis 30 Gew.-% Weichmachern,
als Füllstoffe und/oder Pigmente sowie gegebenenfalls Antioxidationsmittel, Haftvermittler und andere Hilfsstoffe,
wobei die Weichmacher ihrerseits zu 10 bis 100 Gew.-% aus den gemäß einem der Ansprüche 1 bis 3 zu verwendenden Epithioverbindungen und zu 85 bis 0 Gew.-% aus üblichen Weichmachern bestehen.

**Claims**

1. The use of epithio derivatives of unsaturated carbon compounds having a molecular weight of the individual compounds or a number average of the molecular weight of technical mixtures and polymer mixtures in the range from 80 to 10,000 and containing at least one sulfur atom per 30 carbon atoms as plasticizers and stabilizers for sealing compounds based on SH-terminated derivatives of polyesters or polyethers which cure in the presence of oxidizing metal compounds, the ratio by weight of SH compound to epithio derivative being 1:0.05 to 1:1.5.

2. The use claimed in claim 1, characterized in that the epithio derivatives have a molecular weight or a number average thereof in the range from 115 to 6,500.

3. The use claimed in claim 1 or 2, characterized in that the epithio derivatives have a sulfur content of 3.5 to 8.5% by weight.

4. The use claimed in any of claims 1 to 3, characterized in that epithiopolybutadiene is used as the epithio derivative.

5. The use claimed in any of claims 1 to 3, characterized in that the epithio derivatives are selected from the group consisting of epithiofatty acids containing 8 to 22 carbon atoms, $C_{1-4}$ alkyl esters and glycerides thereof and epithiofatty alcohols derived from the epithiofatty acids.

6. Sealing compounds curing in the presence of oxidizing metal compounds and containing
a) SH-terminated derivatives of polyester or polyether polyols having number averages of the molecular weight in the range from 1,000 to 6,500 and
b) epithioderivatives to be used in accordance with any of claims 1 to 5
in ratios by weight of 1 : 0.05 to 1 : 1.5,
and optionally typical additional plasticizers, fillers, pigments, antioxidants, coupling agents and other typical auxiliaries.

7. Sealing compounds as claimed in claim 6, characterized in that they contain SH-terminated derivatives of polyether/polyester polyols obtainable by reaction of polyether or polyester polyols containing 2 to 4

OH groups and having number averages of the molecular weight in the range from 1,000 to 6,500 either with thioalkanoic acids or first with less than the equivalent quantity of diisocyanates and subsequent reaction of the free NCO groups with mercaptoalkanols.

**8.** Sealing compounds as claimed in claim 6 or 7 containing
a) SH-terminated derivatives of polyester polyols obtainable by reaction of propylene oxide adducts of glycerol, trimethylol propane or pentaerythritol having number averages of the molecular weight in the range from 1,000 to 6,500 either with thioglycolic acid or first with tolylene diisocyanate in a simple equivalent excess, based on hydroxyl groups, and subsequent reaction of the isocyanate prepolymers with mercaptoethanol and
b) epithioderivatives from the group consisting of epithiofatty acids containing 8 to 22 carbon atoms, $C_{1-4}$ alkyl esters and glycerides thereof and epithioalcohols derived from the epithiofatty acids.

**9.** Sealing compounds as claimed in any of claims 6 to 8, characterized by a content of
20 to 30% by weight of the SH-terminated derivatives of polyester or polyether polyols and
20 to 30% by weight plasticizers
as fillers and/or pigments and, optionally, antioxidants, coupling agents and other auxiliaries,
10 to 100% by weight of the plasticizers consisting of the epithio compounds to be used in accordance with any of claims 1 to 3 and 85 to 0% by weight of typical plasticizers.

**Revendications**

**1.** Mise en oeuvre d'épithiodérivés de composés carbonés insaturés avec un poids moléculaire des composés individuels ou une moyenne numérique du poids moléculaire de mélanges techniques et de mélanges de polymères compris entre 80 et 10000, comportant au moins un atome de soufre pour 30 atomes de carbone, comme plastifiants et stabilisants pour des masses d'étanchéité durcissant en présence de composés métalliques oxydants, à base de dérivés de polyesters ou de polyéthers à groupe terminal SH, le rapport pondéral entre le composé SH et l'épithiodérivé étant compris entre 1:0,05 et 1:1,5.

**2.** Mise en oeuvre selon la revendication 1, caractérisée en ce que les épithiodérivés présentent un poids moléculaire ou une moyenne numérique de celui-ci comprise entre 115 et 6500.

**3.** Mise en oeuvre selon la revendication 1 ou 2, caractérisée en ce que les épithiodérivés présentent une concentration en soufre comprise entre 3,5 et 8,5 % en poids.

**4.** Mise en oeuvre selon l'une des revendications 1 à 3, caractérisée en ce que l'on utilise comme épithiodérivé de l'épithiopolybutadiène.

**5.** Mise en oeuvre selon l'une des revendications 1 à 3, caractérisée en ce que les épithiodérivés sont sélectionnés dans le groupe formé par des épithioacides gras comportant 8 à 22 atomes de carbone, des esters alkyliques de $C_1$ à $C_4$ et des glycérides de ceux-ci, ainsi que des épithioalcools gras dérivés des épithioacides gras.

**6.** Masses d'étanchéité durcissant en présence de composés métalliques oxydants, renfermant
a) des dérivés à groupe terminal SH de polyester- ou de polyétherpolyols avec des moyennes numériques du poids moléculaire comprises entre 1000 et 6500 et
b) des épithiodérivés à mettre en oeuvre conformément à l'une des revendications 1 à 5
dans des rapports pondéraux compris entre 1:0,05 et 1:1,5,
ainsi que, le cas échéant, des plastifiants, charges, pigments, antioxydants et agents adhésifs usuels supplémentaires et autres adjuvants courants.

**7.** Masses d'étanchéité selon la revendication 6, caractérisées en ce qu'elles renferment des dérivés à groupe terminal SH de polyéther- ou polyesterpolyols, qui sont obtenables par mise en réaction de polyéther- ou polyesterpolyols renfermant 2 à 4 groupes OH avec des moyennes numériques du poids moléculaires s'échelonnant de 1000 à 6500, soit avec des acides thioalcanoïques, soit tout d'abord avec un excès de diisocyanates puis par mise en réaction des groupes NCO libres avec des mercaptoalcanols.

**8.** Masse d'étanchéité selon la revendication 6 ou 7, renfermant

a) des dérivés à groupe terminal SH de polyesterpolyols obtenables par mise en réaction d'adduits d'oxyde de propylène sur la glycérine, sur le triméthylolpropane ou sur le pentaérythrite avec des moyennes numériques du poids moléculaire s'échelonnant de 1000 à 6500, soit avec de l'acide thioglycolique, soit tout d'abord avec du toluylènediisocyanate en excès équivalent simple par rapport aux groupes hydroxyles, puis par mise en réaction des polymères d'isocyanate avec du mercaptoéthanol, et

b) des épithiodérivés faisant partie du groupe formé par des épithioacides gras comportant 8 à 22 atomes de carbone, des esters alkyliques de $C_1$ à $C_4$ et des glycérides de ceux-ci ainsi que des épithioalcools dérivés des épithioacides gras.

**9.** Masses d'étanchéité selon l'une des revendications 6 à 8, caractérisées par un contenu de
20 à 30 % en poids de dérivés à groupe terminal SH de polyester- ou de polyétherpolyols et
20 à 30 % en poids de plastifiants,
comme charges et/ou pigments ainsi que, le cas échéant, d'antioxydants, agents adhésifs et autres adjuvants,
les plastifiants se composant quant à eux de 10 à 100 % en poids des épithiocomposés à mettre en oeuvre conformément à l'une des revendications 1 à 3, et de 85 à 0 % en poids de plastifiants usuels.